(19) **Europäisches Patentamt**

**European Patent Office**

**Office européen des brevets**

(11) **EP 1 104 090 A2**

(12) **EUROPEAN PATENT APPLICATION**

(43) Date of publication:
**30.05.2001  Bulletin 2001/22**

(51) Int Cl.[7]: **H02P 9/42**, H02P 9/48,
H02K 17/44

(21) Application number: **00126047.0**

(22) Date of filing: **29.11.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority:  **29.11.1999  DK 171199**<br><br>(71) Applicant: **BONUS ENERGY A/S**<br>**7330 Brande (DK)** | (72) Inventor: **Stiesdal, Henrik**<br>**DK-7330 Brande (DK)**<br><br>(74) Representative: **Nielsen, Leif et al**<br>**Patrade A/S**<br>**Aaboulevarden 21**<br>**8000 Aarhus C (DK)** |

(54) **Electric generator and method for operating the same**

(57)     The invention concerns a method for operating a generator set and an apparatus for use in the method.
    A frequency converter (6) is used and brought to rotate with the same speed as a rotor (2) in the generator of the windmill. Hereby it becomes possible to avoid collector rings.

## Description

The present invention concerns a method for operating a generator set where a generator is powered through a main shaft by a source of energy, e.g. wind. The invention also concerns a generator set for use in the method.

It is known that certain operational advantages may be achieved in generator sets in windmills and in systems driven by a combustion engine if one is to establish operation with variable speed.

Many modem windmill types are provided with an asynchronous generator directly connected to network. This type of generator has significant advantages. Even if certain adaptations have been made in the winding, in principle the directly network connected asynchronous generator is only a directly network connected asynchronous motor which is driven up to a supersynchronous speed by an external energy source. An asynchronous motor with short-circuited rotor is the most simple and sturdy form of electric motor, and the asynchronous generator has the same advantages. The only wear parts are constituted by the bearings. Large numbers produced on the motor side implies that the price per kW is the lowest possible.

However, the directly network connected asynchronous generator with short-circuited rotor has substantial drawbacks in connection with windmill operation also. The drawbacks are associated to the mainly constant speed for this type of generator. By larger power outputs, the generator may only be made with a slip exceeding 1 % since the power loss deposited in the rotor in principle is proportional with the slip. If the slip exceeds the normal limit of 1 %, the rotor losses become so great that it may cause thermal problems. With a slip of 1 % or below, the speed of the windmill becomes largely constant.

A largely constant speed is a condition for the one of the two normal forms of power regulation, stall regulation. Simultaneously with this being a condition for the regulation, too small slip may on the other hand cause problems with power fluctuations due to torsional oscillations in the transmission system. Small slip means small dampening in the generator, and therefore continuing oscillations of a certain, not insignificant magnitude may occur.

By stall regulation, the advantages of the largely constant speed will normally surpass the drawbacks. It is different in the case of the other of the two normal forms of power regulation, pitch regulation, where it results in quite appreciable problems. Pitch regulation is based on the wings being set mechanically in another pitch angle on the rotor hub when the power deviates from the desired power. If the rotor absorbs a different power from the wind than absorbed by the generator, the rotor will accelerate until there is balance again between absorbed and supplied power. If the generator slip is small, only a minor acceleration is required before the generator may yield a appreciable different power. The time, which the regulating system is having for setting the wings, therefore becomes very short, and in practice pitch regulated mill with directly network connected asynchronous generator have great power variations due to fluctuations in wind speed.

The directly network connected asynchronous generator has also certain significant disadvantages in connection with network quality. First, consideration to voltage variations in the network requires that coupling of the generator occurs with power electronics as coupling with traditional contactors with result in too great voltage fluctuations. Second, the asynchronous generator has a not insignificant consumption of reactive power for magnetising. Commonly, it is necessary to supply a windmill provided with a directly network connected asynchronous generator with phase compensation, typically in the form of a condensator battery.

The problem with the reactive power consumption may be solved in principle by using a directly network connected synchronous generator. This type of generator has its own technical drawbacks, including a winded rotor. In return, the network conditions are good. If the requirements to the network conditions were great, it could be argued that the disadvantages of the synchronous generator were acceptable. The reason that this type of generator still cannot be used at all in directly network connected version without any special arrangements is that the slip of the synchronous generator is 0.

The above mentioned drawbacks by the asynchronous generator with small slip assume their most extreme form in the directly network connected synchronous generator, and in practice operation with 0 slip is impossible due to power variations. The synchronous generator may only be used in direct network connection if a slip between gear and generator is established in another way. Such a slip may e.g. be provided with a hydraulic coupling. However, it is difficult to achieve more than a few percent of slip in this way, and it will normally not be sufficient to ensure a completely satisfactory regulation.

The deficiencies inextricably associated with the directly network connected asynchronous generator with short-circuit rotor have been known commonly for a long time. For stall regulated windmills, where the power regulation presupposes an approximately constant speed, the asynchronous generator is normally considered a close to optimal solution, and the effort has therefore been concentrated around relieving the associated problems. Methods have been developed for adjusting the slip in the making itself of the generator, so that the specifications of the generator may be optimised for the dynamic properties of the actual type of windmill. Electronic coupling systems have been developed, and both fixed and regulating phase compensating systerns may be supplied as standard.

For pitch regulated windmills, the picture is different. The disadvantages associated with operation with pitch regulation and small slip have appeared to be appreciable, and largely all commercial windmills with pitch regulation eventually have one or another form of variable speed.

The variable speed may be established in different ways.

In a simple embodiment, the directly network connected asynchronous generator with short-circuited rotor may be substituted with a likewise directly network connected asynchronous generator with winded rotor, collector rings and external resistors. In this arrangement, the main part of the rotor loss is deposited in the external resistors, and the slip is proportional with the rotor power. A arbitrarily large slip may be attained. However, the arrangement has substantial drawbacks. A winded rotor and collector rings are to be used, both cost-raising elements, and with the collector rings and their brushes wear parts are introduced that to an appreciable extent reduce the sturdiness of the generator. If a substantial increase in the slip is to be achieved, the rotor loss also becomes significant at part load where it is unwanted, and normally it would be necessary to introduce a kind of regulation of the external resistors, something which implies further complexity.

In a more advanced embodiment, a directly network connected asynchronous generator with winded rotor is used, where the collector rings and the external resistors are substituted by power electronics and resistors mounted on the rotor. As in the embodiment with external resistor, the slip is proportional with the rotor power, and the resistance may be regulated with the power electronics so the losses at part load are minimised. Though the difficulties with collector rings and brushes are avoided, this arrangement has, however, significant drawbacks. A winded rotor is still to be used, and removal of the collector rings implies that rotating power electronics with communication to the stationary mill control is to be used, which in turn considerably reduces the robustness of the generator. As the resistors are not external, there are limits to how great thermal load that may be deposited and thereby to the size of the slip. Typically, values of 10 % are indicated.

Common to the two above solutions is that by increased slip only upward regulation of speed from the synchronous speed is possible, not downward. To this comes that the problem of the asynchronous generator of reactive consumption for magnetising is unchanged, and that external phase compensation therefore is still to be used.

In a third embodiment, the problem with the reactive consumption may be solved simultaneously with achieving greater flexibility in the speed. Again, a directly network connected asynchronous generator with winded rotor and collector rings is used, but the external resistors are substituted with a 4-quadrant frequency converter coupled to the network. In this way the power deposited in the rotor is converted and fed back to the network. With a power contribution from the rotor, the nominal power of the stator may be reduced correspondingly. By suitable dimensioning, the frequency converter may supply reactive power to the stator winding, and the need for external phase compensation may be relieved. Contrary to the above mentioned solutions, both up and down regulation of the speed may be performed, and it is mainly the dimensioning of the frequency converter that sets the limits for variations in the speed. The dimensioning is not quite simple if the frequency converter is also to supply reactive power to the stator, but in general it is true that the frequency converter is to have a relative size compared with the stator corresponding to the desired slip. Typically, there may be a need for a regulating range of +/- 20 %.

In spite of greater flexibility, the arrangement with a frequency converter on a winded rotor has, however, its specific disadvantages. A winded rotor and collector rings are still to be used. Since the rotor voltage is proportional to the slip, damaging overvoltages may occur on the frequency converter if the slip during regulation exceeds the desired value. Conversely, regulation near the synchronous speed is normally not possible as the slip is little here and the voltages consequently small.

In a fourth embodiment, a directly network connect asynchronous generator is used with short-circuited rotor which is connected to a 4-quadrant frequency converter coupled to the network. In this way, all the power is converted before it is fed back to the network. The frequency converter may supply reactive power to the generator, and the need for external phase compensation can be obviated. The speed may be regulated both up an down, and since the frequency converter is dimensioned to full power, the regulating range typically becomes 10-15 %.

In spite of the simpler embodiment where the robust short-circuit generator can be used, the arrangement with full frequency conversion has, however, it own drawbacks. The frequency converter itself becomes large and expensive as it has to transmit all the power. The losses in the converter become correspondingly large, typically 3-4 % of the generator power. This implies substantial demands for cooling, and the physical dimensions of the frequency converter itself may result in that placing in the windmill is only done with difficulty. Although good net conditions may be achieved with the frequency converter as seen from a static view, a frequency converter also produces harmonic overfrequencies in the network to a certain extent. This is also the case in the solution with a frequency converter on the rotor side only but in that situation the stator circuit acts as a filter to a certain extent. In the solution discussed here with full frequency conversion, the overfrequencies will be unfiltered, and it may be necessary to use external reactors as well as a special type of transformer contributing to the filtering.

tearless transmission systems for windmills are also known where gear and generator are substituted by a slow-running, multipolar generator. Such a directly driven generator may be designed as a synchronous generator with winded rotor or with permanent magnets, or it may be designed as alternative type. Common to directly driven, multipolar generators is that their dimensions are large. The air gap diameter at 2 MW rated capacity may e.g. of the magnitude 5 m by an embodiment with winded rotor, and a little less by a an embodiment with permanently magnetised rotor.

The gear becomes superfluous with a directly driven, multipolar generator. All known solutions on windmills are designed with a frequency converter between the generator and the network as it is difficult to achieve a pole number corresponding to the 50 Hz net frequency at nominal speed. Therefore, multipolar generators normally generates with a somewhat lower frequency, e.g. 20 Hz, whereby the number of poles may be reduced to 2/5, and better room for the coil winding is obtained. Even though the frequency converter constitutes increased complexity compared with a generator system in which the generator is coupled directly to the network, it may be presumed that the reduction in complexity by omitting the main gear more than offsets this.

A significant drawback by a directly driven, multipolar generator is the physical dimensions. By an air gap diameter of 5 m, the outer diameter becomes in the magnitude of 6 m, and the dead load of e.g. a 2 MW generator becomes approximately as large as the dead load of the components substituted, gear and normal generator, i.e. 20 tons or more. The large outer diameter makes transport difficult, and the dead load does not diminish the problem with exchanging for repair by possible breakdowns either.

Another significant disadvantage is that it is necessary to use a frequency converter in full size. If it is desired to couple the generator directly to the network, two great problems will be encountered immediately. One problem is that such a large generator may normally be made only with synchronous characteristic as the magnetising conditions by an asynchronous characteristic become too inferior. By direct network connection, one has the problem that the characteristic of the generator becomes too rigid since the slip becomes 0. The second problem is that the pole number becomes so high that in practice it is impossible to make space for the necessary number of poles simultaneously with achieving an acceptable efficiency. Hence, it is necessary to use a frequency converter. But this entails problems in itself as mentioned above: large costs, large physical dimensions, high demands to the electric quality from the net section of the frequency converter and not insignificant losses. The voltage level with a frequency converter is also limited as the voltage cannot substantially exceed a phase voltage of 690 V with the state of the art technology in a competitive version.

The purpose of the present invention is to provide a method and an apparatus for operating a generator set, preferably in windmills with variable speed which reduces the drawbacks associated with prior art methods. This purpose is achieved by using a double generator consisting of a coupling of two separate generators on the same shaft where the rotor circuits are coupled together by means of a frequency converter. The combined generator may be said to consist of an exciter section and a generator section, the exciter section only being used for providing the rotor field in the generator section, and where the stator of the generator section is directly coupled to the network.

The purpose is furthermore to provide a configuration of a directly driven, multipolar generator in a windmill reducing the disadvantages associated with known configurations of such generators. This purpose is achieved by using a solution where the excitation field in the rotor of the generator is moved with a speed relative to the stator which is considerably higher than the physical rotational speed.

This solution has many advantages.

By designing the double generator as described with an exciter section and a generator section, and with a frequency converter rotating with the common rotor structure for exciter section and generator section, collector rings may be avoided completely. Only a rotating communication connection that may be established without contact, e.g. with an inductive, capacitive or optical connection, is required.

The generator section acquires synchronous properties with the advantages associated therewith regarding the net influence.

Compared with the second common solution where collector rings are also avoided, namely the asynchronous generator with short-circuited rotor and full frequency converter, the double generator has the very significant advantage that the frequency converter may be designed with a fraction of the total generator power. The frequency convert may predominantly be designed with a power output corresponding to the slip multiplied with the total generator power. Since a fully satisfactory pitch regulation may be achieved with e.g. 10 % slip, a frequency converter with a power of 10 % of the rated output of the windmill only is required. This implies that the losses in and the harmonic disturbances from the frequency converter are reduced correspondingly.

By disposing the frequency converter on the rotor circuit compared with the solution with full frequency conversion as well as solutions with winded rotor there is obtained the very significant advantage that the frequency converter do not have to be made so that it can deliver a quality of electric current corresponding to the requirements by network connection. Possible overfrequencies from the frequency converter are filtered off to a certain extent in the inductive connection between the rotor and the stator of the generator section. Therefore, the frequency converter may be produced in a much cheaper way. Another very significant advantage is that the stator of the generator may be made with a high voltage winding while the rotor is designed to operate at a voltage level which is suitable for the frequency converter. When the power from the stator of the generator is with high voltage initially, considerable savings may be obtained by the further transformation.

In a particularly advantageous version of the double generator, further advantages are achieved. The double generator may thus be made as two separate units where the exciter section is a shaft mounted unit which is fastened to the shaft of a common generator with winded rotor. Thereby is achieved the special advantage that the generator section may be a normal standard item, only without collector rings, whereas only the exciter section is custom made. This may result in considerable savings as the exciter section may be made with electric features making it suitable for magnetising generators of different makes. In practice, the double generator is, for example, provided by dismounting the collector ring parts from a machine with winded rotor, boring through the shaft for electric connection to the exciter section, mounting the exciter section on the shaft, and mounting the frequency converter on the shaft end, the converter exchanging regulation information with the stationary system via a rotating optical connection.

In another particularly advantageous version of the double generator, still further advantages may be achieved. These further advantages may particularly be obtained where the generator is a slow-running, multipolar generator, directly driven by the rotor of the windmill but may also be utilised in normal transmission systems with gear. It is possible with advantage to utilise the property of the double generator that exciter section and frequency converter may be dimensioned to a substantial part of the total power. In such a configuration, the field in the rotor of the generator may be brought to rotate with a speed relative to the mechanical structure of the rotor being not insignificant compared with the rotor speed itself. For example, the field speed may be doubled compared with a stationary frame of reference if the exciter section and the frequency converter are transmitting a power output corresponding to half the power yielded from the generator section. The needed pole number in the stator section of the generator may be halved for the directly driven generator if the stator section is connected to the network directly. Hereby the pole number may be reduced to a level where it becomes possible to wind the generator for direct network connection without resulting in so narrow poles that the efficiency is tangibly reduced. With the direct network connection, the generator section of the directly driven network connected generator may be made with a high voltage winding, something which is not possible by the known versions of the directly driven generators. Since the effect is achieved by means of the frequency converter also enabling variable speed, this effect is the result of a surprising and particularly favourable combination of the chosen solution with the double generator.

For a generator for a normal transmission system with gear, also dimensional advantages may be obtained, e. g. by halving the number of poles in the stator section.

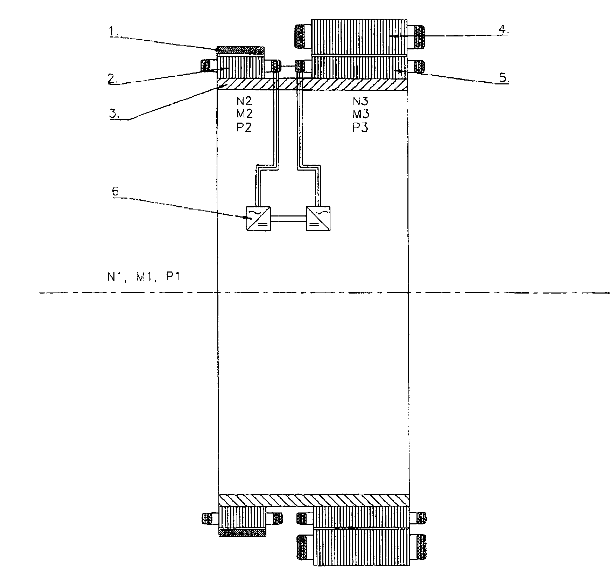

The invention is described more closely in the following as reference is made to the drawing which shows a section through a double generator according to the invention.

The double generator has an exciter section with a stator 1, here made with permanent magnets. The rotor 2 of the exciter section is made with a normal three-phase winding. It is fastened to the rotor structure 3 of the double generator. The generator section has a stator 4 which is directly connected to the network. The rotor section 5 of the generator section is fastened to the rotor structure 3 and is connected to the rotor 2 of the exciter section by the frequency converter 6.

The interaction between the different parts of the double generator may be illustrated with reference to the embodiment where a slow-running double generator is coupled to the main shaft of the windmill and where it is desired that the stator 4 of the generator section may be directly network connected.

The generator shaft has the speed of rotation N1, the torque M1, and the input power P1. The field of the exciter section has the speed N2 relative to the stator of the exciter section, and the exciter section yields the torque M2 and delivers the power P2 to the frequency converter. The field of the generator has the speed N3 relative to the stator, and the generator section yields the torque M3 and the power P3.

Basically, it is true that P1 = P3 (what comes in from the rotor of the windmill has to go out of the generator section), and that M1 = M2 + M3. Furthermore, N1 = N2. However, N3 is not equal to N1 even though the parts are situated on the same rotor shaft as the essential thing is the speed of the field in relation to the stator of the generator section. N3 is equal to N1 plus the excess speed that the field may obtain with the power coming from the exciter section.

If e.g. it is decided that the power P2 of the exciter section has to be 50 % of the input power P1, the following system of equations may be set up:

$$P2 = 0.5 * P1$$
$$\Rightarrow \quad M2 = 0.5 * M1$$
$$\Rightarrow \quad M3 = M1 - M2 = 0.5 * M1$$
$$\Rightarrow \quad N3 = 2 * N1$$

In other words: If the exciter section and the frequency converter are loaded with 50 % of the nominal power, the field in the rotor of the generator section is made to rotate relative to the stator with a speed which is twice the physical speed of the rotor.

Thereby, the pole number in the stator of the generator section is halved when this has to be directly connected to the network.

Other conditions may be chosen; if the exciter section and the frequency converter are dimensioned to lesser power, the speed increase in the generator section also becomes less, and vice versa. In an extreme case, exciter section and frequency converter are dimensioned to nominal power, and thereby the generator section may be designed as a normal two- or four-poled synchronous machine where only the field speed deviates strongly from the physical speed of the rotor.

**Claims**

1. A method for operating a generator set where a generator is powered through a main shaft by a source of energy, e.g. wind, driving a wind rotor, where a stator and a winded three-phase rotor the winding of which is fed by a three-phase frequency converter creating a rotating field in the rotor, and which is controlled so that the sum of the created rotating field and the one coming from the rotation obtains the desired synchronous frequency, where the rotor of the exciter section is electrically coupled with the rotor of the generator section by a frequency converter, and where in certain situations the field of the generator section is driven with a rotational speed deviating from the rotational speed of the shaft of the generator, as the power thereto is exchanged between the rotor of the exciter section and the rotor of the generator by the frequency converter, **characterised** in that the generator is configured as a double generator with an exciter section and a generator section on the same shaft as the frequency converter is rotated with it, and that the magnetising generator or stator of the exciter section are made with permanent magnets.

2. A method according to claim 1, **characterised** in that the double generator is directly connected to the rotor of the windmill without intermediate speed increasing gear, and that the stator of the generator section is directly connected to the network.

3. A method according to claim 2, **characterised** in that the rotational speed of the field of the generator exceeds the rotational speed of the shaft of the generator with more than 35 %.

4. A generator set where a generator is configured with a stator and a winded three-phase rotor the winding of which is fed by a three-phase frequency converter creating a rotating field in the rotor and controlled so that the sum of the created rotating field and the one coming from the rotation obtains the desired synchronous frequency, **characterised** in that the frequency converter is disposed so that it rotates with the same speed as the rotor of the generator, and that the stator of the exciter section is made with permanent magnets.

5. An apparatus according to claim 4, **characterised** in that the exciter section is made as a separate unit mounted on the shaft of the generator.